# EUROPÄISCHE PATENTSCHRIFT

(11) **EP 1 810 891 B1**
(45) Veröffentlichungstag und Bekanntmachung des Hinweises auf die Patenterteilung: **31.10.2012**
(21) Anmeldenummer: 06001209.3
(22) Anmeldetag: 20.01.2006
(51) Int. Cl.: B60R 21/233, B60R 21/237, B60R 21/207, B60R 21/231

(54) **Luftsackmodul für Kraftfahrzeuge**
Airbag module for vehicles
Module de coussin de sécurité pour véhicules

(43) Veröffentlichungstag der Anmeldung: 25.07.2007
(73) Patentinhaber: Delphi Technologies, Inc., Troy, MI 48007 (US)
(72) Erfinder: Kleipoedssus, Ingo, 42549 Velbert (DE); Maiwald, Helmut, 51515 Kürten (DE); Tessarek, Artur, 44797 Bochum (DE)
(74) Vertreter: Schön, Thilo

(56) Entgegenhaltungen:
- EP-A- 0 847 902
- DE-A- 10 347 315
- DE-A1- 10 130 473
- GB-A- 2 318 767
- US-A- 6 065 772
- US-A- 6 155 598
- US-B1- 6 371 518

## Beschreibung

Die Erfindung betrifft ein Luftsackmodul für Kraftfahrzeuge gemäß dem Oberbegriff das Anspruchs 1.

Ein solcher Luftsack ist beispielsweise aus der DE 103 47 315 A1 bekannt.

Bei Luftsäcken wird generell angestrebt, ein optimales Schutzverhalten mit einem möglichst kleinen Gasvolumen zu erhalten. Je nach Einsatzgebiet des Luftsacks können hierzu ein oder mehrere Formgebungselemente, beispielsweise eingenähte Fangbänder, vorgesehen sein. Luftsäcke sollen außerdem leicht zusammenfaltbar sein und müssen sich möglichst schnell und störungsfrei entfalten können, um die Schutzwirkung so schnell wie möglich bereitzustellen. Einem schnellen Entfalten kommt eine umso größere Bedeutung zu, je größer die vom aufgeblasenen Luftsack abzudeckende Fläche ist. Dabei ist auch zu berücksichtigen, dass die Entfaltungscharakteristik eines Luftsacks auch oder gerade durch eventuell vorhandene Formgebungselemente mitbestimmt wird.

Vor allem Seitenairbags, die sowohl Schutz für Thorax als auch Kopf des Insassen bieten sollen und daher von Haus aus relativ großflächig sind, erfordern besondere Anstrengungen, um den vorstehend genannten Anforderungen gerecht zu werden. Die Anforderungen sind noch größer, wenn Seitenairbags außerdem einen besonders guten OOP-Schutz bieten sollen, wobei OOP für "Out Of Position" steht, was bedeutet, dass der Fahrzeuginsasse auch dann geschützt sein soll, wenn er keine normale Sitzposition einnimmt.

Die vorstehend geschilderte Thematik gewinnt zunehmend an Bedeutung, da gerade Seitenairbags gemäß bestehenden bzw. geplanten Vorschriften bestimmte Tests bestehen müssen, die unter anderem relativ große Schutzflächen fordern.

Aufgabe der Erfindung ist es, ein Luftsackmodul mit einem Seitenairbag der eingangs genannten Art zu schaffen, dessen Luftsack eine möglichst große Schutzfläche bietet und hinsichtlich Formgebung sowie Art und Weise des Zusammenfaltens derart gestaltet ist, dass der Luftsack die Schutzposition beim Aufblasen so schnell wie möglich einnimmt.

Die Lösung dieser Aufgabe erfolgt durch die Merkmale des Anspruchs 1.

Der Luftsack ist im aufgeblasenen Zustand von flächiger Gestalt und umfasst einen Kopfabschnitt sowie einen Thoraxabschnitt, wobei der Luftsack mit einem lang gestreckten Formgebungselement versehen ist, das sich längs des Thoraxabschnitts erstreckt und leicht geneigt zur Vertikalen verläuft, und wobei der Luftsack im zusammengefalteten Zustand ein durch eine oder mehrere Einstülpungen gebildetes Paket ist, das in Falten gelegt ist, die sich parallel oder leicht geneigt zum Formgebungsabschnitt erstrecken.

Erfindungsgemäß ist es vorgesehen, dass im zusammengefalteten Luftsack ein einstülpungsfreier Gasausbreitungsweg vorhanden ist, der von einem auf der einen Seite des Formgebungselementes angeordneten Gasgenerator durch einen Teil des Thoraxabschnitts hindurch und an dem Formgebungselement vorbei zu einem auf der anderen Seite des Formgebungselementes gelegenen Teil des Kopfabschnitts verläuft.

Es hat sich herausgestellt, dass durch das Vorsehen einer oder mehrerer Einstülpungen, die gebildet werden, bevor der Luftsack in Falten gelegt wird, die oben erläuterten Anforderungen erfüllt werden. Das sich längs des Thoraxabschnitts erstreckende und dabei parallel oder leicht geneigt zur Vertikalen verlaufende Formgebungselement sorgt zum einen für eine optimale Formgebung des Luftsacks, die ein homogenes Verhalten des Luftsacks beim Aufblasen sowie ein homogenes Schutzvolumen gewährleistet. Das Formgebungselement, bei dem es sich insbesondere um ein innerhalb des Luftsacks gelegenes, mit den im aufgeblasenen Zustand die flächigen Seiten des Luftsacks bildenden Hauptlagen vernähtes Fangband handelt, und die wenigstens eine Einstülpung lassen sich zum anderen derart aufeinander abstimmen, dass sich der erfindungsgemäße Luftsack äußerst schnell positioniert und somit ein ausgezeichnetes OOP-Verhalten an den Tag legt.

Der Luftsack kann im Bereich des Thoraxabschnitts lediglich auf einer Seite des Formgebungselementes mit einer Einstülpung versehen sein, und dabei insbesondere auf der in Fahrtrichtung gesehen hinteren Seite. Die Einstülpung kann eine Stülprichtung aufweisen, die parallel oder leicht geneigt zum Formgebungselement verläuft.

Eine im Bereich des Kopfabschnitts vorgesehene Einstülpung kann eine Stülprichtung aufweisen, die im Wesentlichen horizontal verläuft.

Der Kopfabschnitt kann eine in Fahrtrichtung gesehen nach vorne weisende Nase aufweisen, und es kann vorgesehen sein, dass diese Nase eingestülpt ist.

In einer möglichen Ausgestaltung weist der Luftsack wenigstens zwei Einstülpungen auf, von denen eine im Wesentlichen quer zur Richtung des Formgebungselementes und die andere im Wesentlichen in Richtung des Formgebungselementes gebildet ist.

Dabei kann eine zuerst gebildete Einstülpung ein Bestandteil einer später gebildeten weiteren Einstülpung sein.

Die beiden Einstülpungen können auf verschiedenen Seiten des Formgebungselementes liegen.

Was die Ausgestaltung der Einstülpungen anbetrifft, so kann die oder jede Einstülpung derart gebildet sein, dass ein einen Randabschnitt umfassender einzustülpender Bereich des Luftsacks mit dem Randabschnitt voran zwischen die zu diesem Zweck auseinander gezogenen, im aufgeblasenen Zustand die flächigen Seiten des Luftsacks bildenden Materiallagen nach innen geschoben ist.

Dabei kann vorgesehen sein, dass der zunächst nach innen geschobene Randabschnitt wieder etwas zurückgezogen ist.

Bei der Faltung des die wenigstens eine Einstülpung umfassenden Paketes handelt es sich insbesondere um eine Z-Faltung, deren Falten parallel oder leicht geneigt zum Formgebungselement verlaufen.

Die Lösung der der Erfindung zugrundeliegenden Aufgabe erfolgt außerdem durch die Merkmale des Anspruchs 13.

Bei diesem Verfahren zur Herstellung eines Luftsackmoduls für Kraftfahrzeuge, das einen aufblasbaren Luftsack umfasst, der als Seitenschutzairbag ausgebildet ist, im aufgeblasenen Zustand von flächiger Gestalt ist und einen Kopfabschnitt sowie einen Thoraxabschnitt umfasst, wird der Luftsack mit einem lang gestreckten Formgebungselement versehen, das sich längs des Thoraxabschnitts erstreckt und parallel oder leicht geneigt zur Vertikalen verläuft, und wird der Luftsack vor dem endgültigen Zusammenfalten mit einer oder mehreren Einstülpungen versehen.

Dabei kann Luftsack zunächst im Kopfabschnitt mit einer im Wesentlichen horizontalen Einstülpung und anschließend im Thoraxabschnitt mit einer im Wesentlichen vertikalen Einstülpung versehen werden.

Ferner kann zunächst eine Nase des Kopfabschnitts eingestülpt und anschließend der Kopfabschnitt in den Thoraxabschnitt gestülpt werden.

Der Luftsack kann mit mehreren Einstülpungen versehen werden, die auf unterschiedlichen Seiten des Formgebungselementes liegen.

Zum endgültigen Zusammenfalten des Luftsacks wird ein durch ein oder mehrere Einstülpungen gebildetes Paket in Falten gelegt.

Weitere Ausführungsformen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1a und 1b: verschiedene Ansichten eines erfindungsgemäßen Luftsacks im ausgebreiteten Zustand,
- Fig. 2a und 2b: die Bildung einer ersten Einstülpung am Luftsack von Fig. 1b,
- Fig. 3a bis 3c: ausgehend vom Zustand gemäß Fig. 2b die Bildung einer zweiten Einstülpung (zwei Varianten), und
- Fig. 4a und 4b: ausgehend vom Zustand gemäß Fig. 3b das endgültige Zusammenfalten des Luftsacks.

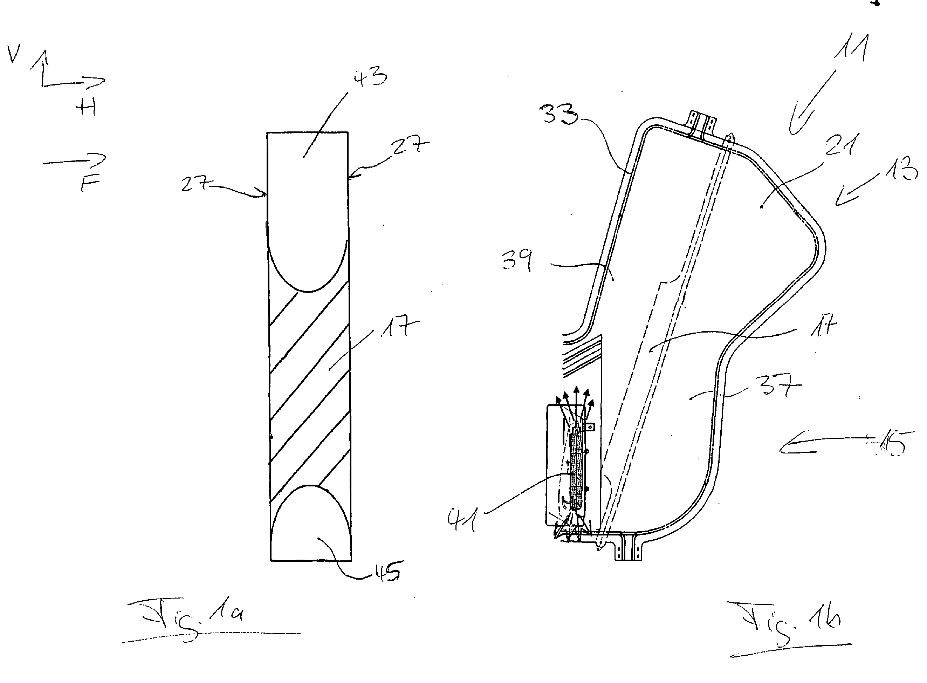

In Fig. 1a und 1b ist von dem erfindungsgemäßen Luftsackmodul im Wesentlichen nur der als Seitenairbag ausgebildete Luftsack 11 im ausgebreiteten Zustand dargestellt. Fig. 1b zeigt eine Seitenansicht, der zu entnehmen ist, dass die Ausdehnung des Luftsacks 11 in Vertikalrichtung V größer ist als die maximale Ausdehnung in Horizontalrichtung H. Der Luftsack 11 umfasst einen unteren Thoraxabschnitt 15 sowie einen oberen Kopfabschnitt 13, der mit einer in Fahrtrichtung F gesehen nach vorne weisenden Nase 21 versehen ist.

Die Form des Luftsacks 11 in diesem Ausführungsbeispiel kann als diejenige eines aufrecht stehenden Rechtecks beschrieben werden, das im Bereich der oberen Hälfte gegenüber der Vertikalen V leicht nach vorne geneigt und in diesem Bereich mit der bereits erwähnten, nach vorne weisenden nasenförmigen Erweiterung 21 versehen ist.

Der Luftsack 11 besteht aus zwei Hauptlagen 27 (Fig. 1a), die selbst jeweils einlagig oder auch mehrlagig ausgebildet sein können. Wie Fig. 1b zeigt, sind die beiden Lagen durch eine im Randbereich gelegene Umfangs- oder Abschlussnaht 33 miteinander vernäht.

Außerdem ist ein im Inneren des Luftsacks 11 gelegenes Formgebungselement 17 in Form eines eingenähten Fangbandes vorhanden. Das Fangband 17 weist im Bereich des Thoraxabschnitts 15 eine Höhe auf, die im aufgeblasenen Zustand den Sollabstand zwischen den beiden Lagen 27 in diesem Bereich festlegt.

Fig. 1a ist zu entnehmen, dass sich das Fangband 17 nicht über die gesamte Höhe des Luftsacks 11 erstreckt. Sowohl oberhalb als auch unterhalb des Fangbandes 17 besteht eine Öffnung oder Querverbindung 43, 45 zwischen den durch das Fangband 17 voneinander getrennten Bereichen innerhalb des Luftsacks 11, die im Folgenden auch als vordere Kammer 37 und hintere Kammer 39 bezeichnet werden. Durch die Öffnungen 43, 45 kann das Strömungsverhalten des Luftsacks 11 zwischen den beiden Kammern 37, 39 gezielt vorgegeben werden.

Fig. 1b zeigt, dass sich das Fangband 17 leicht geneigt zur Vertikalen V erstreckt und dabei etwa parallel zum hinteren Randbereich des Kopfabschnitts 13 verläuft.

Außerdem zeigt Fig. 1b die Anordnung eines mit einem Diffusor versehenen Gasgenerators 41, der so ausgebildet ist, dass das Gas im Wesentlichen nach oben und nach unten ausgestoßen wird, wie es durch die Pfeile angedeutet ist.

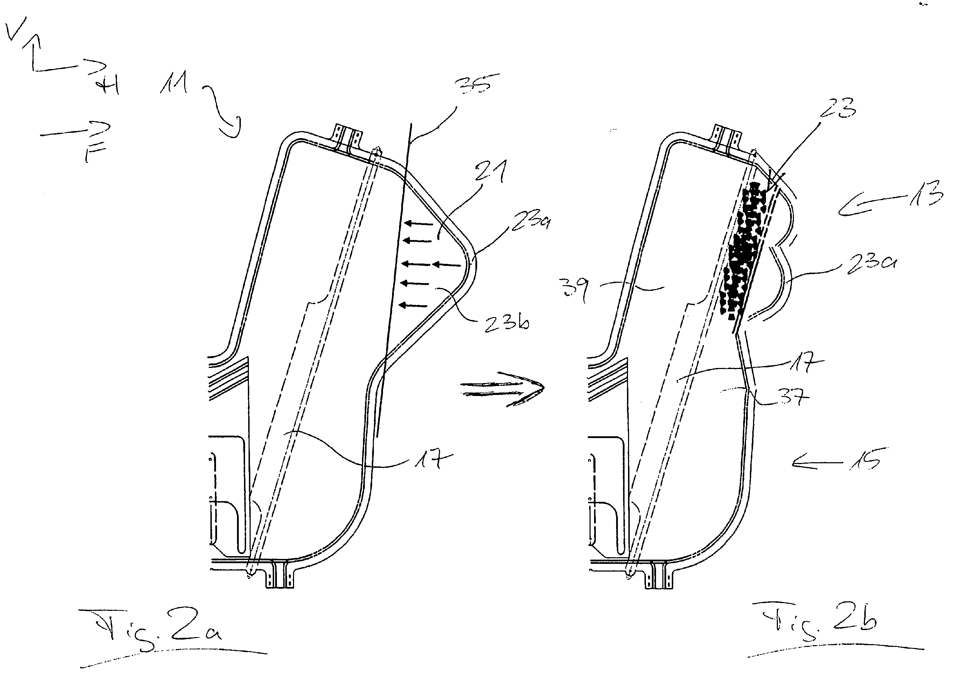

Anhand der Fig. 2 bis 4 wird nachstehend das Zusammenfalten, -legen oder -nehmen des Luftsacks 11 erläutert, wodurch ein Luftsackpaket entsteht, das zusammen mit einem Gasgenerator 41 (Fig. 1b) sowie anderen Einzelheiten wie beispielsweise Befestigungselementen, auf die hier nicht näher eingegangen werden soll, ein erfindungsgemäßes Luftsackmodul bildet, das als Seitenairbag in die Rückenlehne von Kfz-Sitzen integriert wird.

Ausgehend von dem Zustand gemäß Fig. 1b wird zunächst eine erste horizontale Einstülpung 23 gebildet. Hierzu wird die Nase 21 des Kopfabschnitts 13 bis zu einer in Fig. 2a durch eine durchgezogene Linie angedeuteten Einstülpebene 35 eingestülpt, wie es durch die kleinen Pfeile angedeutet ist. Dies erfolgt derart, dass der einzustülpende Bereich 23b des Luftsacks mit seinem Randbereich 23a voran zwischen die hierzu etwas auseinandergezogenen Materiallagen 27 (Fig. 1a) des Luftsacks nach innen geschoben wird. Der Randbereich 23a wird anschließend wieder etwas zurückgezogen, so dass er aus der Einstülpung 23 hervorsteht, wie es in Fig. 2b angedeutet ist.

Die hierdurch gebildete Einstülpung 23 befindet sich folglich im Kopfabschnitt 13 im vorderen Bereich des Luftsacks, d.h. in der vorderen Kammer 37, und zwar oberhalb des Fangbandes 17.

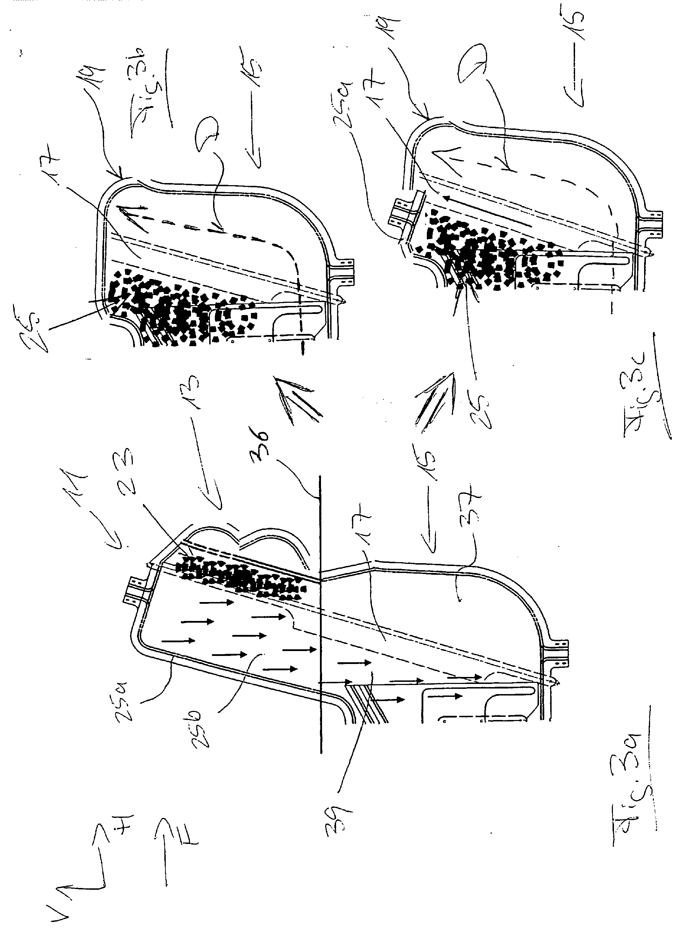

Ausgehend von dem Zustand gemäß Fig. 2b wird anschließend eine zweite, vertikale Einstülpung 25 gebildet. Hierzu wird praktisch bis zu einer Einstülpebene 36 der die erste, horizontale Einstülpung 23 umfassende Kopfabschnitt 13 in den Thoraxabschnitt 15 gestülpt. Dieses Einstülpen erfolgt ausschließlich hinter dem Fangband 17, d.h. in der hinteren Kammer 39 des Luftsacks 11, wie es in Fig. 3a durch die kleinen Pfeile angedeutet ist. Hierzu wird wiederum der einzustülpende Bereich 25b mit dem entsprechenden Randbereich 25a voran zwischen die dabei auseinandergezogenen Lagen 27 (Fig. 1a) des Luftsacks 11 nach innen geschoben.

Es resultiert der in Fig. 3b dargestellte Zustand, in welchem im Thoraxabschnitt 15 die zweite Einstülpung 25 hinter (in Fahrtrichtung gesehen) dem Fangband 17 liegt.

Fig. 3c zeigt eine Variante zur Vorgehensweise in Fig. 3a. Gemäß Fig. 3c wurde der zunächst nach innen geschobene Randbereich 25a wieder etwas zurückgezogen (angedeutet durch den Pfeil in Fig. 3c), so dass der Randbereich 25a aus der Einstülpung 25 herausragt.

In dem hierdurch gebildeten, zwei Einstülpungen 23, 25 umfassenden Paket, das einen Zwischenzustand beim "Verpacken" des Luftsacks 11 darstellt, ist somit ein Gasausbreitungsweg D vorhanden, der unten am Fangband 17 vorbei, durch die Öffnung 45 (Fig. 1a) hindurch von der hinteren Kammer 39 in die vordere Kammer 37 und dann innerhalb des Thoraxabschnitts 15 nach oben zum entsprechenden Teil des Kopfabschnitts 13 führt. Durch die Größe der Öffnung 45 kann das Strömungsverhalten entlang des Weges D gezielt gesteuert werden.

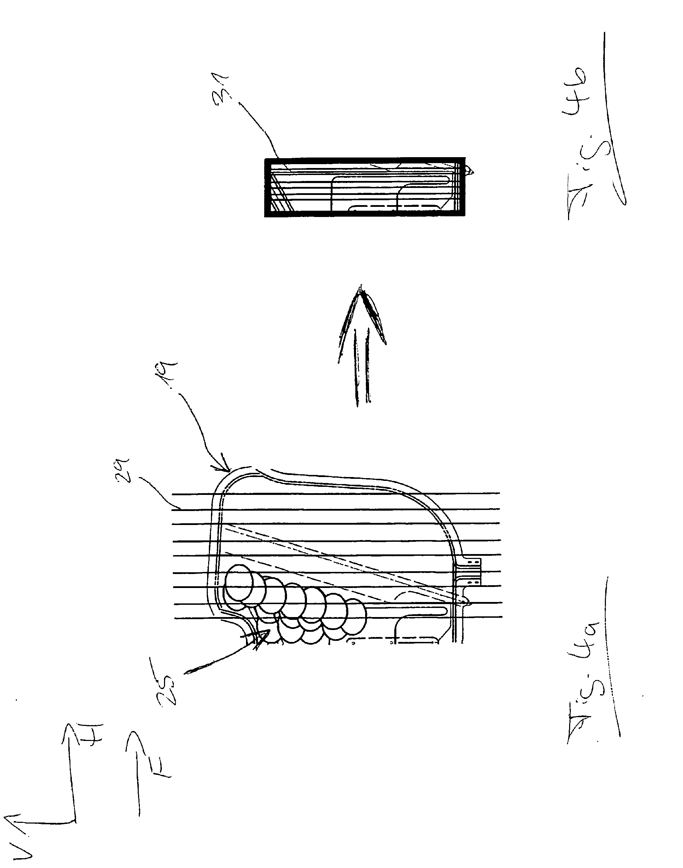

Ausgehend von dem Zustand gemäß Fig. 3b bzw. Fig. 3c wird anschließend das ausschließlich die beiden Einstülpungen 23, 25 enthaltende Paket 19 endgültig zusammengefaltet. Hierzu wird eine Z-Faltung 31 (Fig. 4b) gebildet, deren Falten 29 (Fig. 4a) in vertikaler Richtung V verlaufen. Zur Herstellung der Z-Faltung wird das Paket 19 in horizontaler Richtung H von vorne nach hinten gefaltet, indem es jeweils an den in Fig. 4a angedeuteten Falten 29 abwechselnd nach links und rechts umgeschlagen wird.

Hieraus resultiert ein endgültiges, Z-gefaltetes Paket, dessen Höhe etwa der Höhe des Thoraxabschnitts 17 entspricht.

Zu erwähnen ist noch, dass das den Ausgangspunkt für die Bildung der Z-Faltung bildende, die beiden Einstülpungen 23, 25 umfassende Paket 19 gemäß Fig. 3b näherungsweise einen rechteckigen Umriss aufweist.

### Bezugszeichenliste

- 11: Luftsack
- 13: Kopfabschnitt
- 15: Thoraxabschnitt
- 17: Formgebungselement, Fangband
- 19: Paket
- 21: Nase
- 23: Einstülpung im Kopfabschnitt
- 25: Einstülpung im Thoraxabschnitt
- 27: Lage des Luftsacks
- 29: Falte
- 31: Z-Faltung
- 33: Umfangs- oder Abschlussnaht
- 35: Einstülpebene
- 36: Einstülpebene
- 37: vordere Kammer
- 39: hintere Kammer
- 41: Gasgenerator
- 43: Öffnung, Strömungsverbindung
- 45: Öffnung, Strömungsverbindung

- V: Vertikalrichtung
- H: Horizontalrichtung
- F: Fahrtrichtung
- D: Gasausbreitungsweg

## Patentansprüche

1. Luftsackmodul für Kraftfahrzeuge,
mit einem aufblasbaren Luftsack (11), der als Seitenschutzairbag ausgebildet ist,
wobei der Luftsack (11) im aufgeblasenen Zustand von flächiger Gestalt ist und einen Kopfabschnitt (13) sowie einen Thoraxabschnitt (15) umfasst,
wobei der Luftsack (11) in seinem Inneren mit einem Formgebungselement (17) versehen ist, das als lang gestrecktes Fangband ausgebildet ist und das sich längs des Thoraxabschnitts (15) erstreckt und parallel oder leicht geneigt zur Vertikalen (V) verläuft,
**dadurch gekennzeichnet, dass** der Luftsack (11) im zusammengefalteten Zustand ein durch eine oder mehrere Einstülpungen (23, 25) gebildetes Paket (19) ist, das in Falten (29) gelegt ist, die sich parallel oder leicht geneigt zum Formgebungselement (17) erstrecken,
wobei im zusammengefalteten Luftsack (11) ein einstülpungsfreier
Gasausbreitungsweg (D) vorhanden ist, der von einem auf der einen Seite des Formgebungselementes (17) angeordneten Gasgenerator (41) durch einen Teil des Thoraxabschnitts (15) hindurch und an dem Formgebungselement (17) vorbei zu einem auf der anderen Seite des Formgebungselementes (17) gelegenen Teil des Kopfabschnitts (13) verläuft.

2. Luftsackmodul nach Anspruch 1,
**dadurch gekennzeichnet ,**
**dass** der Luftsack (11) im Bereich des Thoraxabschnitts (25) lediglich auf einer Seite des Formgebungselementes (17) mit einer Einstülpung (25) versehen ist, insbesondere auf der in Fahrtrichtung (F) gesehen hinteren Seite.

3. Luftsackmodul nach Anspruch 2,
**dadurch gekennzeichnet,**
**dass** die Einstülpung (25) eine Stülprichtung aufweist, die parallel oder leicht geneigt zum Formgebungselement (17) verläuft.

4. Luftsackmodul nach einem der vorhergehenden Ansprüche, **dadurch gekennzeichnet,**
**dass** eine Einstülpung (23) im Bereich des Kopfabschnitts (13) eine Stülprichtung aufweist, die im Wesentlichen horizontal verläuft.

5. Luftsackmodul nach einem der vorhergehenden Ansprüche, **dadurch gekennzeichnet,**
**dass** der Kopfabschnitt (13) eine in Fahrtrichtung (F) gesehen nach vorne weisende Nase (21) aufweist.

6. Luftsackmodul nach Anspruch 5,
**dadurch gekennzeichnet,**
**dass** die Nase (21) des Kopfabschnitts (13) zumindest bereichsweise eingestülpt ist.

7. Luftsackmodul nach einem der vorhergehenden Ansprüche, **dadurch gekennzeichnet,**
**dass** der Luftsack (11) wenigstens zwei Einstülpungen (23, 25) aufweist, von denen eine im Wesentlichen quer zur Richtung des Formgebungselementes (17) und die andere im Wesentlichen in Richtung des Formgebungselementes (17) gebildet ist.

8. Luftsackmodul nach Anspruch 7,
**dadurch gekennzeichnet,**
**dass** eine zuerst gebildete Einstülpung (23) ein Bestandteil einer später gebildeten weiteren Einstülpung (25) ist.

9. Luftsackmodul nach Anspruch 7 oder 8,
**dadurch gekennzeichnet,**
**dass** die beiden Einstülpungen (23, 25) auf verschiedenen Seiten des Formgebungselementes (17) gelegen sind.

10. Luftsackmodul nach einem der vorhergehenden Ansprüche,
**dadurch gekennzeichnet,**
**dass** die oder jede Einstülpung (23, 25) derart gebildet ist, dass ein einen Randabschnitt (23a, 25a) umfassender Bereich (23b, 25b) des Luftsacks (11) mit dem Randabschnitt (23a, 25a) voran zwischen die hierzu auseinander gezogenen, im aufgeblasenen Zustand die flächigen Seiten des Luftsacks (11) bildenden Materiallagen (27) des Luftsacks (11) nach innen geschoben ist.

11. Luftsackmodul nach einem der vorhergehenden Ansprüche,
**dadurch gekennzeichnet,**
**dass** bei der oder jeder Einstülpung (23, 25) ein zunächst nach innen geschobener Randabschnitt (23a, 25a) wieder etwas zurückgezogen ist.

12. Luftsackmodul nach einem der vorhergehenden Ansprüche,
**dadurch gekennzeichnet,**
**dass** die Faltung des Paktes (19) eine Z-Faltung ist.

13. Verfahren zur Herstellung eines Luftsackmoduls für Kraftfahrzeuge, das einen aufblasbaren Luftsack (11) umfasst, der als Seitenschutzairbag ausgebildet ist, im aufgeblasenen Zustand von flächiger Gestalt ist und einen Kopfabschnitt (13) sowie einen Thoraxabschnitt (15) umfasst,
bei dem
- der Luftsack (11) in seinem Inneren mit einem als lang gestrecktes Fangband ausgebildeten Formgebungselement (17) versehen wird, das sich längs des Thoraxabschnitts (15) erstreckt und parallel oder leicht geneigt zur Vertikalen (V) verläuft,
**dadurch gekennzeichnet, dass**
- der Luftsack (11) vor dem endgültigen Zusammenfalten derart mit einer oder mehreren Einstülpungen (23, 25) versehen wird, dass im zusammengefalteten Luftsack (11) ein einstülpungsfreier Gasausbreitungsweg (D) vorhanden ist, der von einem auf der einen Seite des Formgebungselementes (17) angeordneten Gasgenerator (41) durch einen Teil des Thoraxabschnitts (15) hindurch und an dem Formgebungselement (17) vorbei zu einem auf der anderen Seite des Formgebungselementes (17) gelegenen Teil des Kopfabschnitts (13) verläuft.

14. Verfahren nach Anspruch 13,
**dadurch gekennzeichnet,**
**dass** der Luftsack (11) zunächst im Kopfabschnitt (13) mit einer im Wesentlichen horizontalen Einstülpung (23) und anschließend im Thoraxabschnitt (15) mit einer im Wesentlichen vertikalen Einstülpung (25) versehen wird.

15. Verfahren nach Anspruch 13 oder 14,
**dadurch gekennzeichnet,**
**dass** zunächst eine Nase (21) des Kopfabschnitts (13) eingestülpt und anschließend der Kopfabschnitt (13) in den Thoraxabschnitt (15) gestülpt wird.

16. Verfahren nach einen der Ansprüche 13 bis 15,
**dadurch gekennzeichnet,**
**dass** der Luftsack (11) auf unterschiedlichen Seiten des Formgebungselementes (17) mit Einstülpungen (23, 25) versehen wird.

17. Verfahren nach einem der Ansprüche 13 bis 16,
**dadurch gekennzeichnet,**
**dass** zum endgültigen Zusammenfalten des Luftsacks (11) ein durch eine oder mehrere Einstülpungen (23, 25) gebildetes Paket (19) in Falten gelegt wird.

18. Verfahren nach Anspruch 17,
**dadurch gekennzeichnet,**
**dass** sich parallel oder leicht geneigt zum Formgebungselement (17) erstreckende Falten (29) gebildet werden.

19. Verfahren nach Anspruch 17 oder 18,
**dadurch gekennzeichnet,**
**dass** eine Z-Faltung (31) gebildet wird.

## Claims

1. Airbag module for vehicles,
with an inflatable airbag (11) designed as a side protection airbag,
wherein the airbag (11) in the inflated state is of a planar shape and comprises a head section (13) and a thorax section (15),
wherein the airbag (11) is provided in its inside with a shaping element (17) that is designed as an elongated rebound strap and that extends along the thorax section (15) and runs parallel or slightly inclined to the vertical (V), **characterised in that** the airbag (11) in its folded state is a package (19) formed by one or a number of inversions (23, 25), said package laid in folds (29) that extend parallel or slightly inclined to the shaping element (17),
wherein, in the folded airbag (11), there is an inversion-free gas diffusion path (D) that runs from a gas generator (41) arranged on the one side of the shaping element (17) through a part of the thorax section (15) and past the shaping element (17) to a part of the head section (13) located on the other side of the shaping element (17).

2. Airbag module according to claim 1,
**characterised in**
**that** the airbag (11) in the area of the thorax section (25) only has an inversion (25) on one side of the shaping element (17), especially on the rear side as seen in the direction of travel (F).

3. Airbag module according to claim 2,
**characterised in**
**that** the inversion (25) has an inversion direction that runs parallel or slightly inclined to the shaping element (17).

4. Airbag module according to any one of the preceding claims,
**characterised in**
**that** an inversion (23) in the area of the head section (13) has an inversion direction that runs essentially horizontally.

5. Airbag module according to any one of the preceding claims,
**characterised in**
**that** the head section (13) has a nose (21) that points forward as seen in the direction of travel (F).

6. Airbag module according to claim 5,
**characterised in**
**that** the nose (21) of the head section (13) is at least inverted in certain areas.

7. Airbag module according to any one of the preceding claims,
**characterised in**
**that** the airbag (11) has at least two inversions (23, 25), one of which is essentially formed transversal to the direction of the shaping element (17) and the other of which is essentially formed in the direction of the shaping element (17).

8. Airbag module according to claim 7,
**characterised in**
**that** an inversion (23) formed first is part of a further inversion (25) formed later.

9. Airbag module according to claim 7 or 8,
**characterised in**
**that** the two inversions (23, 25) are located on different sides of the shaping element (17).

10. Airbag module according to any one of the preceding claims,
**characterised in**
**that** the or any inversion (23, 25) is formed such that an area (23b, 25b) of the airbag (11), said area comprising an edge section (23a, 25a), with the edge section (23a, 25a) ahead, is pushed inwards between the material layers (27) of the airbag (11) which, for this purpose, are pulled apart and, in the inflated state, form the planar sides of the airbag (11).

11. Airbag module according to any one of the preceding claims,
**characterised in**
**that**, for the or any inversion (23, 25), an edge section (23a, 25a) initially pushed inwards is again pulled back slightly.

12. Airbag module according to any one of the preceding claims,
**characterised in**
**that** the fold of the package (19) is a "Z" fold.

13. Method for manufacturing an airbag module for vehicles, which comprises an inflatable airbag (11) that is designed as a side protection airbag, is of a planar shape in the inflated state and comprises a head section (13) and a thorax section (15),
in which
- the airbag (11) is provided in its inside with a shaping element (17) that is designed as an elongated rebound strap that extends along the thorax section (15) and runs parallel or slightly inclined to the vertical (V),
**characterised in that**
- the airbag (11) is provided, prior to the final folding, with one or a number of inversions (23, 25) such that, in the folded airbag (11), there is an inversion-free gas diffusion path (D) that runs from a gas generator (41) arranged on the one side of the shaping element (17) through a part of the thorax section (15) and past the shaping element (17) to a part of the head section (13) located on the other side of the shaping element (17).

14. Method according to claim 13,
**characterised in**
**that** the airbag (11) is initially provided, in the head section (13), with an essentially horizontal inversion (23) and then, in the thorax section (15), with an essentially vertical inversion (25).

15. Method according to claim 13 or 14,
**characterised in**
**that** initially a nose (21) of the head section (13) is inverted and then the head section (13) is inverted into the thorax section (15).

16. Method according to any one of the claims 13 to 15,
**characterised in**
**that** the airbag (11) is provided with inversions (23, 25) on different sides of the shaping element (17).

17. Method according to any one of the claims 13 to 16,
**characterised in**
**that**, for the final folding of the airbag (11), a package (19) formed by one or a number of inversions (23, 25) is laid in folds.

18. Method according to claim 17,
**characterised in**
**that** folds (29), which extend parallel or slightly inclined to the shaping element (17), are formed.

19. Method according to claim 17 or 18,
**characterised in**
**that** a "Z" fold (31) is formed.

## Revendications

1. Module de coussin de sécurité pour véhicules automobiles,
avec un coussin de sécurité gonflable (11) qui est réalisé comme un airbag de protection latéral,
le coussin de sécurité (11) présentant une forme plane à l'état gonflé et comporte une section de tête (13) ainsi qu'une section de thorax (15),
le coussin de sécurité (11) étant pourvu à l'intérieur d'un élément de formage (17) qui est réalisé comme une bande de retenue étirée en longueur et qui s'étend le long de la section de thorax (15) et s'étend parallèlement ou légèrement incliné par rapport à la verticale (V),
**caractérisé en ce que**
le coussin de sécurité (11) à l'état replié est un paquet (19) formé par un ou plusieurs emboutissages (23, 25) qui est mis en plis (29) qui s'étendent parallèlement ou légèrement inclinés par rapport à l'élément de formage (17),
une course de propagation de gaz (D) sans emboutissage étant présente dans le coussin de sécurité (11) replié, laquelle s'étend à partir d'un générateur de gaz (41) disposé sur un côté de l'élément de formage (17) à travers une partie de la section de thorax (15) et devant l'élément de formage (17) jusqu'à une partie de la section de tête (13) placée de l'autre côté de l'élément de formage (17).

2. Module de coussin de sécurité selon la revendication 1,
**caractérisé en ce que**
le coussin de sécurité (11) est pourvu d'un emboutissage (25) dans la zone de la section de thorax (25) d'un seul côté de l'élément de formage (17), en particulier sur le côté arrière par rapport au sens de la marche (F).

3. Module de coussin de sécurité selon la revendication 2,
**caractérisé en ce que**
l'emboutissage (25) présente une direction d'emboutissage qui s'étend parallèlement ou légèrement incliné par rapport à l'élément de formage (17).

4. Module de coussin de sécurité selon l'une quelconque des revendications précédentes, **caractérisé en ce que**
un emboutissage (23) présente dans la zone de la section de tête (13) une direction d'emboutissage qui s'étend sensiblement horizontalement.

5. Module de coussin de sécurité selon l'une quelconque des revendications précédentes, **caractérisé en ce que**
la section de tête (13) présente un nez (21) dirigé vers l'avant par rapport au sens de la marche (F).

6. Module de coussin de sécurité selon la revendication 5,
**caractérisé en ce que**
le nez (21) de la section de tête (13) est embouti au moins par endroits.

7. Module de coussin de sécurité selon l'une quelconque des revendications précédentes, **caractérisé en ce que**
le coussin de sécurité (11) présente au moins deux emboutissages (23, 25), dont l'un est formé sensiblement transversalement à la direction de l'élément de formage (17) et l'autre sensiblement dans la direction de l'élément de formage (17).

8. Module de coussin de sécurité selon la revendication 7,
**caractérisé en ce que**
un emboutissage formé tout d'abord (23) est un constituant d'un autre emboutissage (25)
formé plus tard.

9. Module de coussin de sécurité selon la revendication 7 ou 8,
**caractérisé en ce que**
les deux emboutissages (23, 25) sont placés sur différents côtés de l'élément de formage (17).

10. Module de coussin de sécurité selon l'une quelconque des revendications précédentes, **caractérisé en ce que**
le ou chaque emboutissage (23, 25) est formé de telle manière qu'une zone (23b, 25b) comportant une section de bord (23a, 25a) du coussin de sécurité (11) soit poussée vers l'intérieur avec la section de bord (23a, 25a) en avant entre les couches de matériau (27) du coussin de sécurité (11) formant à l'état gonflé les côtés plans du coussin de sécurité (11), étirées à cet effet.

11. Module de coussin de sécurité selon l'une quelconque des revendications précédentes, **caractérisé en ce que**
pour le ou chaque emboutissage (23, 25), une section de bord (23a, 25a) poussée d'abord vers l'intérieur puis de nouveau un peu en retrait.

12. Module de coussin de sécurité selon l'une quelconque des revendications précédentes, **caractérisé en ce que**
le pliage du paquet (19) est un pliage en Z.

13. Procédé de fabrication d'un module de coussin de sécurité pour véhicules automobiles qui comporte un coussin de sécurité (11)
gonflable réalisé comme un airbag de protection latéral, présente une forme plane à l'état gonflé et comporte une section de tête (13) ainsi qu'une section de thorax (15),
pour lequel
- le coussin de sécurité (11) est pourvu à l'intérieur d'un élément de formage (17) réalisé comme une bande de retenue étirée en longueur, qui le long de la section de thorax (15) et s'étend parallèlement ou légèrement incliné par rapport à la verticale (V)
**caractérisé en ce que**
- le coussin de sécurité (11) avant le repliage final est pourvu d'un ou de plusieurs emboutissage (23, 25) de telle manière qu'une course de propagation de gaz (D) sans emboutissage soit présente dans le coussin de sécurité (11) replié, laquelle s'étend à partir d'un générateur de gaz (41) disposé sur un côté de l'élément de formage (17) à travers une partie de la section de thorax (15) et devant l'élément de formage (17) jusqu'à une partie de la section de tête (13) placée de l'autre côté de l'élément de formage (17).

14. Procédé selon la revendication 13, **caractérisé en ce que**
le coussin de sécurité (11) est pourvu tout d'abord dans la section de tête (13) d'un emboutissage (23) sensiblement horizontal puis dans la section de thorax (15) d'un emboutissage (25) sensiblement vertical.

15. Procédé selon la revendication 13 ou 14, **caractérisé en ce que**
tout d'abord un nez (21) de la section de tête (13) est embouti puis la section de tête (13) est emboutie dans la section de thorax (15).

16. Procédé selon l'une quelconque des revendications 13 à 15,
**caractérisé en ce que**
le coussin de sécurité (11) est pourvu d'emboutissages (23, 25) sur différents côtés de
l'élément de formage (17).

17. Procédé selon l'une quelconque des revendications 13 à 16,
**caractérisé en ce que**
un paquet (19) formé d'un ou plusieurs emboutissages (23,25) est mis en plis pour le repliage final du coussin de sécurité (11).

18. Procédé selon la revendication 17, **caractérisé en ce que**
des plis (29) s'étendant parallèlement ou légèrement inclinés par rapport à l'élément de formage (17) sont formés.

19. Procédé selon la revendication 17 ou 18, **caractérisé.en ce que**
un pli en Z (31) est formé.
